# EUROPEAN PATENT APPLICATION

(11) **EP 2 897 209 A1**
(43) Date of publication of application: **22.07.2015**
(21) Application number: 13837706.4
(22) Date of filing: 18.02.2013
(51) Int. Cl.: H01M 10/0562, H01B 1/06, H01B 1/10

(54) **SULFIDE SOLID ELECTROLYTE**

(30) Priority: 11.09.2012 JP 2012199569
(71) Applicant: TOYOTA JIDOSHA KABUSHIKI KAISHA, Toyota-shi, Aichi-ken, 471-8571 (JP); Tokyo Institute of Technology, Tokyo 152-8550 (JP)
(72) Inventor: KATO, Yuki, Toyota-shi Aichi 471-8571 (JP); OTOMO, Takamasa, Toyota-shi Aichi 471-8571 (JP); KANNO, Ryoji, Tokyo 152-8550 (JP); HIRAYAMA, Masaaki, Tokyo 152-8550 (JP)
(74) Representative: Kuhnen & Wacker
(86) International application number: PCT/JP2013/053871
(87) International publication number: WO 2014/041823

(57) **Abstract**

A main object of the present invention is to provide a sulfide solid electrolyte whose reduction decomposition potential can be decreased more than a conventional LGPS-based sulfide solid electrolyte. The present invention is a sulfide solid electrolyte comprising Li, Al, Ge, P, and S, wherein M0 = M2/M1 is 0 < M0 < 0.323 where M1 is a mole fraction of contained P, and M2 is a mole fraction of contained Al, and in a case where each of X1 and X2 is an element selected from the group consisting of P, Ge, and Al, a crystal structure thereof includes an octahedron O formed by Li and S, a tetrahedron T1 formed by S and X1, and a tetrahedron T2 formed by S and X2, wherein the octahedron O and the tetrahedron T2 share a ridge, and the octahedron O and the tetrahedron T2 share an apex.

## Description

### TECHINICAL FIELD

The present invention relates to a sulfide solid electrolyte.

### BACKGROUND ART

A lithium-ion secondary battery has a higher energy density and is operable at a high voltage compared to conventional secondary batteries. Therefore, it is used for information devices such as a cellular phone, as a secondary battery which can be easily reduced in size and weight, and nowadays there is also an increasing demand for the lithium-ion secondary battery to be used as a power source for large-scale apparatuses such as electric vehicles and hybrid vehicles.

The lithium-ion secondary battery includes a cathode layer, an anode layer, and an electrolyte layer arranged between them. An electrolyte to be used in the electrolyte layer is, for example, a non-aqueous liquid or a solid. When the liquid is used as the electrolyte (hereinafter, the liquid being referred to as "electrolytic solution"), it easily permeates into the cathode layer and the anode layer. Therefore, an interface can be easily formed between the electrolytic solution and active materials contained in the cathode layer and the anode layer, and the battery performance can be easily improved. However, since commonly used electrolytic solutions are flammable, it is necessary to have a system to ensure safety. On the other hand, if a nonflammable solid electrolyte (hereinafter referred to as "solid electrolyte") is used, the above system can be simplified. As such, a lithium-ion secondary battery provided with a layer containing a solid electrolyte (hereinafter, the battery being referred to as "all-solid-state battery") is being developed.

As a technique related to the solid electrolyte which can be used for the all-solid-state battery, for example Non-Patent Literature 1 discloses a sulfide solid electrolyte Li₁₀GeP₂S₁₂ which shows a lithium ion conductivity of 12mScm⁻¹ at 27°C.

### Citation List

### Non-Patent Literatures

Non-Patent Literature 1: Nature Materials, vol. 10, p. 682-686, 2011, doi:10.1038/nmat3066

### SUMMARY OF INVENTION

### Technical Problem

The sulfide solid electrolyte disclosed in Non-Patent Literature 1 shows a higher lithium ion conductivity than that of solid electrolytes reported before then. Therefore, by using the sulfide solid electrolyte, it is expected to attain a high energy density of the all-solid-state battery. However, Li-Ge-P-S based sulfide solid electrolytes such as Li₁₀GeP₂S₁₂ conventionally provided are reduced and decomposed at a potential of around 0.25V in lithium reference (vs Li/Li⁺. The same is applied hereinafter) . Therefore, the high energy density may be difficult to be attained.

Accordingly, an object of the present invention is to provide a sulfide solid electrolyte whose reduction composition potential can be decreased more than that of the conventional LGPS based sulfide solid electrolyte.

### Solution to Problem

As a result of an intensive study, the inventors of the present invention have found out that it is possible to decrease the reduction decomposition potential than the conventional LGPS based sulfide solid electrolyte, by replacing a part of Ge which is a constituent element of the LGPS based sulfide solid electrolyte with Al (hereinafter, the sulfide solid electrolyte in which a part of Ge which is a constituent element of the LGPS based sulfide solid electrolyte is replaced by Al may be referred to as "Al-substitution LGPS based sulfide solid electrolyte"). Further, as a result of an intensive study, the inventors have found out that a sulfide solid electrolyte in which Ge which is a constituent element of the Al-substitution LGPS based sulfide solid electrolyte is replaced by Sn (the sulfide solid electrolyte produced with a raw material substance containing Sn in place of a raw material substance containing Ge, wherein a part of Sn is replaced by Al. The same is applied hereinafter) can also decrease the reduction decomposition potential than the conventional LGPS based sulfide solid electrolyte. The present invention has been made based on the above findings.

In order to solve the above problem, the present invention takes the following means. Namely, a first aspect of the present invention is a sulfide solid electrolyte including Li, Al, Ge, P, and s, wherein M0 = M2/M1 is 0 < M0 < 0.323 where M1 is a mole fraction of contained P, and M2 is a mole fraction of contained Al, and in a case where each of X1 and X2 is an element selected from a group consisting of P, Ge, and Al, a crystal structure of the sulfide solid electrolyte includes an octahedron O formed by Li and S, a tetrahedron T1 formed by S and X1, and a tetrahedron T2 formed by S and X2, wherein the octahedron O and the tetrahedron T1 share a ridge, and the octahedron O and the tetrahedron T2 share an apex (hereinafter, a phase of the crystal structure may be referred to as "crystal phase A").

In the first aspect of the present invention and a second aspect of the present invention shown below, in a case where peaks are positioned at 2θ [deg]=17.38, 20.18, 20.44, 23.56, 23.96, 24.93, 26.96, 29.07, 29.58, 31.71, 32.66, and 33.39 (error of plus or minus 0.5 deg in all of these angles are allowable. The same is applied hereinafter) in an X-ray diffraction measurement by means of CuKα line, the structure can be identified as the crystal phase A. Also, in a case where the peak of 2θ = 27.33 [deg] which is a peak originated from an impurity crystal exists, it is possible to identify the phase as the crystal phase A, when IB/IA < 1 is satisfied where IB is the peak intensity of 2θ = 27.33 [deg] and IA is a peak intensity of 2θ = 29.58 [deg] of the crystal phase A. Also, in the first aspect of the present invention and the second aspect of the present invention shown below, the value of M0 can be identified for example by means of an ICP (Inductively Coupled Plasma) analysis.

By replacing a part of Ge which is an element easy to be reduced with Al which is an element difficult to be reduced, it becomes possible to decrease the reduction decomposition potential of the sulfide solid electrolyte, whereby it becomes possible to decrease the reduction decomposition potential more than the conventional LGPS based sulfide solid electrolytes.

A second aspect of the present invention is a sulfide solid electrolyte including Li, Al, Sn, P, and S, wherein M0 = M2/M1 is 0 < M0 < 0.323 where M1 is a mole fraction of contained P and M2 is a mole fraction of contained Al, and crystal structure of the sulfide solid electrolyte has an octahedron O formed by Li and S, a tetrahedron T1 formed by S and Y1, and a tetrahedron T2 formed by S and Y2, wherein Y1 and Y2 are elements selected from a group consisting of P, Sn, and Al, wherein the octahedron O and the tetrahedron T1 share a ridge, and the octahedron O and the tetrahedron T2 share an apex.

The sulfide solid electrolyte in which Sn is used in place of Ge which is a constituent element of the sulfide solid electrolyte (Al-substitution LGPS based sulfide solid electrolyte) according to the first aspect of the present invention also has a low reduction decomposition potential. Therefore, this configuration also makes it possible to decrease the reduction decomposition potential than the conventional LGPS based sulfide solid electrolyte.

### Advantageous Effect of Invention

According to the present invention, it is possible to provide a sulfide solid electrolyte whose reduction decomposition potential can be decreased more than the conventional LGPS-based sulfide solid electrolyte.

### BRIEF DESCRIPTION OF DRAWINGS

Fig. 1 is a graph showing a result of X-ray diffraction measurement of a sulfide solid electrolyte according to Example 1;
Fig. 2 is a graph showing a capacity/potential curve of the sulfide solid electrolyte according to Example 1;
Fig. 3 is a graph to explain a reduction decomposition potential of the sulfide solid electrolyte according to Example 1;
Fig. 4 is a graph showing a result of X-ray diffraction measurement of a sulfide solid electrolyte according to Example 2;
Fig. 5 is a graph showing a capacity/potential curve of the sulfide solid electrolyte according to Example 2;
Fig. 6 is a graph to explain a reduction decomposition potential of the sulfide solid electrolyte according to Example 2;
Fig. 7 is a graph showing a result of X-ray diffraction measurement of a sulfide solid electrolyte according to Example 3;
Fig. 8 is a graph showing a capacity/potential curve of the sulfide solid electrolyte according to Example 3;
Fig. 9 is a graph to explain a reduction decomposition potential of the sulfide solid electrolyte according to Example 3;
Fig. 10 is a graph showing a result of X-ray diffraction measurement of a sulfide solid electrolyte according to Comparative Example 1;
Fig. 11 is a graph showing a capacity/potential curve of the sulfide solid electrolyte according to Comparative Example 1;
Fig. 12 is a graph to explain a reduction decomposition potential of the sulfide solid electrolyte according to Comparative Example 1;
Fig. 13 is a graph showing a result of X-ray diffraction measurement of a sulfide solid electrolyte according to Comparative Example 2;
Fig. 14 is a graph showing a capacity/potential curve of the sulfide solid electrolyte according to Comparative Example 2;
Fig. 15 is a graph to explain a reduction decomposition potential of the sulfide solid electrolyte according to Comparative Example 2;
Fig. 16 is a graph showing a result of X-ray diffraction measurement of a sulfide solid electrolyte according to Comparative Example 3;
Fig. 17 is a graph showing a result of X-ray diffraction measurement of a sulfide solid electrolyte according to Comparative Example 4; and
Fig. 18 is a graph showing relationship between M0 and the reduction decomposition potential.

### DESCRIPTION OF EMBODIMENTS

The conventional LGPS-based sulfide solid electrolyte has a high lithium ion conductivity, whereas it is reduced and decomposed at a potential of around 0.25V in lithium reference. Therefore, the high energy density of the all-solid-state battery may be insufficiently attained. The inventors considered that Ge which is weak in reduction causes the reduction decomposition of the conventional LGPS-based sulfide solid electrolyte at a potential of around 0.25V in lithium reference, and tried to produce a sulfide solid electrolyte in which a part of Ge is replaced by Al having a high reduction resistant property (Al-substitution LGPA based sulfide solid electrolyte). As a result, it became possible that the reduction decomposition potential of the sulfide solid electrolyte was decreased to less than 0.21V in lithium reference. Further, the reduction decomposition potential of the sulfide solid electrolyte using Sn in place of Ge which is a constituent element of the Al-substitution LGPA based sulfide solid electrolyte was less than 0.2V in lithium reference. From these results, it can be considered that the reduction decomposition potential can be decreased by satisfying the following conditions 1 and 2.

### <Condition 1: The sulfide solid electrolyte is a powder of crystal phase A>

When Z1 is an element selected from the group consisting of Li, Na, K, Mg, Ca, and Zn, and each of Z2 and Z3 is an element selected from the group consisting of P, Sb, Si, Ge, Sn, B, Al, Ga, In, Ti, Zr, V, and Nb, a phase having a crystal structure including an octahedron O formed by Z1 and S, a tetrahedron T1 formed by Z2 and S, and a tetrahedron T2 formed by Z3 and S, wherein the tetrahedron T1 and the octahedron O share a ridge, and the tetrahedron T2 and the octahedron O share an apex, is the crystal phase A.

Here, if the phase has peaks at the positions of 2θ[deg] = 17.38, 20.18, 20.44, 23.56, 23.96, 24.93, 26.96, 29.07, 29.58, 31.71, 32.66, and 33.39, by an X-ray diffraction measurement with CuKα line, the structure can be identified as the crystal phase A. In addition, if there is a peak of 2θ = 27.33[deg] which is a peak corresponding to an impurity crystal, it is possible to identify that the structure is the crystal phase A, if the peak intensity IB of the peak 2θ = 27.33[deg] and the peak intensity IA of 2θ = 29.58[deg] of the crystal phase A satisfy IB/IA < 1.

It should be noted that, in a case where the sulfide solid electrolyte is the Al-substitution LGPS based sulfide solid electrolyte, the octahedron O is formed by Li and S, and the tetrahedrons T1 and T2 are formed by S and an element selected from the group consisting of P, Ge, and Al. In addition, in a case where the sulfide solid electrolyte is a sulfide solid electrolyte in which Sn is used in place of Ge which is a constituent element of the Al-substitution LGPS based sulfide solid electrolyte, the octahedron O is formed by Li and S, and the tetrahedrons T1 and T2 are formed by S and an element selected from the group consisting of P, Sn, and Al.

### <Condition 2: Al substitution amount is within a predetermined range>

When the mole fraction of P contained in the sulfide solid electrolyte is defined as M1, and the mole fraction of Al contained in the sulfide solid electrolyte is defined as M2, it is needed that M0 = M2/M1 is 0 < M0 < 0.323. As described below, if M0 is 0.323, impurities start to be mixed, and if M0 is larger than 0.323, the crystal phase A becomes difficult to be synthesized.

### Examples

### [Example 1]

### Synthesis of electrolyte

Under argon atmosphere, 0.425560 g of Li₂S (manufactured by Nippon Chemical Industrial CO., LTD.), 0.3796162 g of P₂S₅ (manufactured by Aldrich), 0.125778 g of GeS₂ (manufactured by KOJUNDO CHEMICAL LABORATORY CO., LTD), and 0.069045 g of Al₂S₃ (manufactured by KOJUNDO CHEMICAL LABORATORY CO., LTD) were weighed and put in a zirconia pot (capacity: 45 ml) together with 10 of zirconia balls each having a diameter of 10 mm. The pot was sealed under argon atmosphere. After that, the pot was attached to a planetary ball mill machine (manufactured by Fritsch, P-7) and rotated at a speed of 370 rotations per minute for 40 hours, whereby the contents of the pot were mixed. Then, the obtained mixed powder was put in a quartz tube. The pressure inside the quartz tube was reduced to 30 Pa, thereafter the quarts tube was sealed. After that, the sealed quarts tube was heated at 550°C for 8 hours, whereby the sulfide solid electrolyte according to Example 1 was synthesized. The composition of the sulfide solid electrolyte according to Example 1 was Li_{3.525}Al_{0.175}Ge_{0.175}P_{0.65}S₄. In the sulfide solid electrolyte according to Example 1, M0 ≈ 0.26923 was satisfied.

### X-ray diffraction

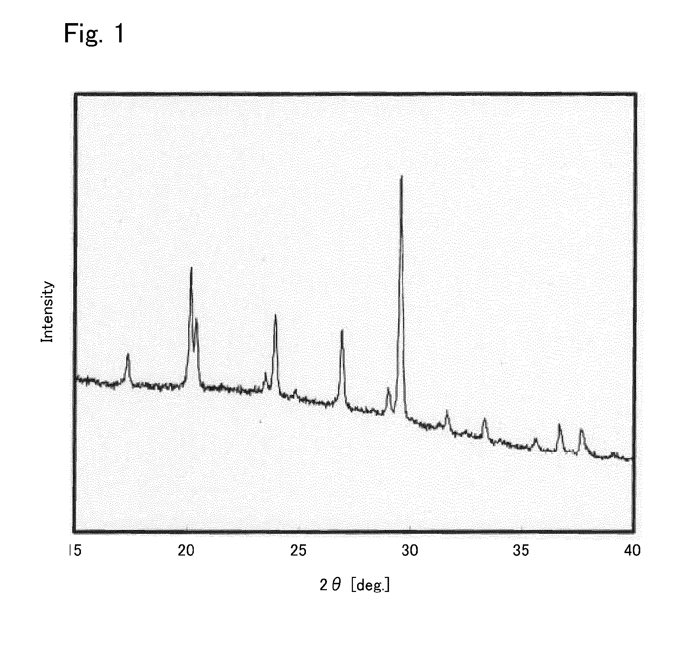

By means of an X-ray diffraction apparatus (Ultima III, manufactured by Rigaku Corporation), an X-ray diffraction measurement with CuKα line was carried out as to the sulfide solid electrolyte according to Example 1. The measurement result is shown in Fig. 1. As shown in Fig. 1, the sulfide solid electrolyte according to Example 1 had peaks at the positions of 2θ[deg] = 17.38, 20.18, 20.44, 23.56, 23.96, 24.93, 26.96, 29.07, 29.58, 31.71, 32.66, and 33.39. Therefore, the structure of the sulfide solid electrolyte according to Example 1 was the crystal phase A.

### Measurement of reduction decomposition potential

The sulfide solid electrolyte according to Example 1 in an amount of 100 mg was put in a cylinder made of Macor and pressed at a pressure of 98 MPa, whereby a solid electrolyte layer was produced. On the other hand, an SUS powder and the sulfide solid electrolyte according to Example 1 were weighed so that the mass ratio thereof was SUS powder:sulfide solid electrolyte according to Example 1 = 80:20, and mixed to obtain a powder for action electrode. The powder for action electrode in an amount of 12 mg was put in the above cylinder made of Macor where the solid electrolyte layer was contained and pressed at a pressure of 392 MPa, whereby an action electrode was produced on one surface of the solid electrolyte layer. Further, LiIn foil which is a reference electrode was put in the above cylinder made of Macor where the solid electrolyte layer and the action electrode were contained, such that the LiIn foil and the solid electrolyte layer have contact with each other, and pressed at a pressure of 98 MPa, whereby a reference electrode was arranged on a surface of the solid electrolyte layer which was not in contact with the action electrode. After that, the solid electrolyte layer sandwiched by the action electrode and the reference electrode was fastened by a bolt at 6 N·cm, whereby an electrochemical measurement cell according to Example 1 was produced.

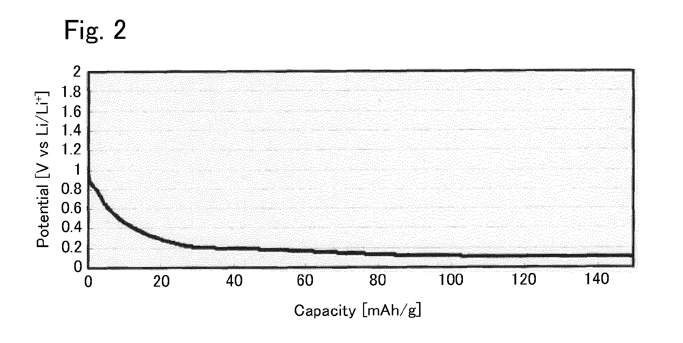

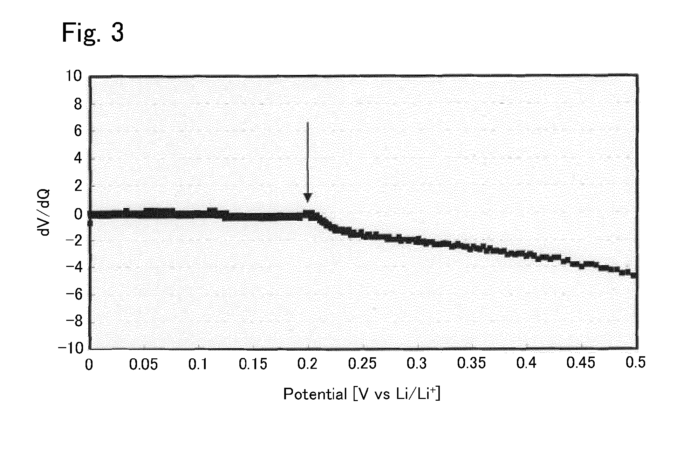

The reduction decomposition potential was measured by decreasing the potential of the action electrode of the electrochemical measurement cell according to Example 1 at a current density of 0.15 mA/cm². By decreasing the potential of the action electrode as above, the capacity/potential curve shown in Fig. 2 was obtained. By differentiating the capacity/potential curve with respect to the capacity, the relationship shown by Fig. 3 was obtained. The point where the differential coefficient was changed in Fig. 3 (the point shown by the arrow) was defined as the reduction decomposition potential. The reduction decomposition potential of the sulfide solid electrolyte according to Example 1 was 0.1992V in lithium reference.

### [Example 2]

A sulfide solid electrolyte according to Example 2 was synthesized in the same manner as in Example 1, except that the starting materials in synthesizing the electrolyte were 0.397341 g of Li₂S (manufactured by Nippon Chemical Industrial CO., LTD.), 0.369102 g of P₂S₅ (manufactured by Aldrich), 0.220129 g of GeS₂ (manufactured by KOJUNDO CHEMICAL LABORATORY CO., LTD), and 0.013426 g of Al₂S₃ (manufactured by KOJUNDO CHEMICAL LABORATORY CO., LTD).

The composition of the synthesized sulfide solid electrolyte according to Example 2 was Li_{3.385}Al_{0.035}Ge_{0.315}P_{0.65}S₄. In the sulfide solid electrolyte according to Example 2, M0 ≈ 0.05385 was satisfied.

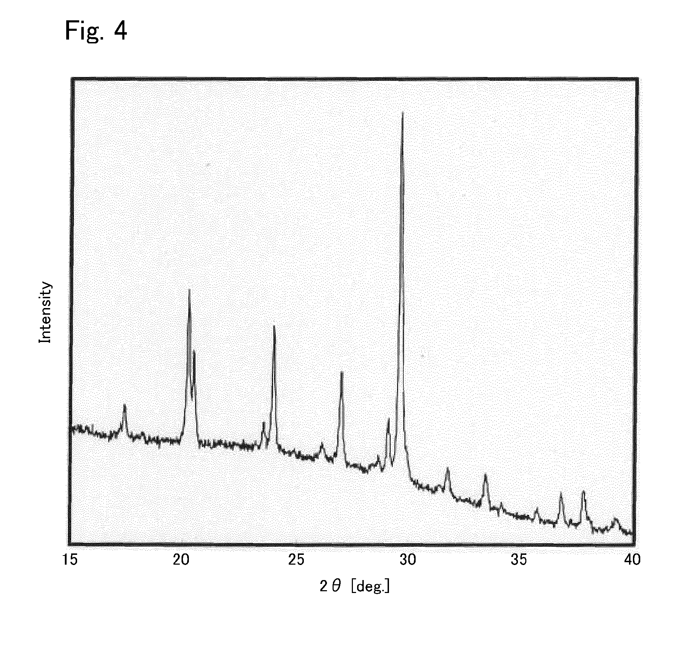

In addition, regarding the sulfide solid electrolyte according to Example 2, an X-ray diffraction measurement was carried out in the same manner as in Example 1. The result is shown in Fig. 4. Comparing Fig. 4 and Fig. 1, it was found that they had peaks at the same positions. Therefore, the structure of the sulfide solid electrolyte according to Example 2 was the crystal phase A.

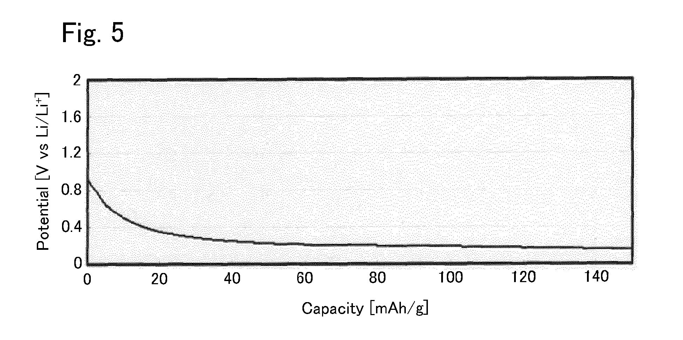

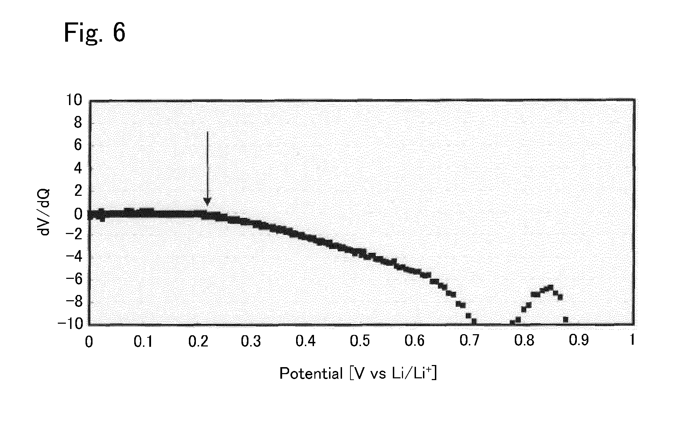

Further, an electrochemical measurement cell according to Example 2 was produced in the same manner as the producing method of the electrochemical measurement cell according to Example 1, except that the sulfide solid electrolyte according to Example 2 was used in place of the sulfide solid electrolyte according to Example 1. Then, the capacity/potential curve of the electrochemical measurement cell according to Example 2 was obtained in the same manner as that of the electrochemical measurement cell according to Example 1. After that, the obtained curve was differentiated with respect to the capacity and the point where the differential coefficient was changed (the point shown by the arrow) was defined as the reduction decomposition potential. The reduction decomposition potential of the sulfide solid electrolyte according to Example 2 was 0.202V in lithium reference. The capacity/potential curve of the electrochemical measurement cell according to Example 2 is shown in Fig. 5, and the relationship obtained by differentiating the capacity/potential curve shown in Fig. 5 is shown in Fig. 6.

### [Example 3]

A sulfide solid electrolyte according to Example 3 was synthesized in the same manner as in Example 1, except that the starting materials in synthesizing the electrolyte were 0.403205 g of Li₂S (manufactured by Nippon Chemical Industrial CO., LTD.), 0.414400 g of P₂S₅ (manufactured by Aldrich), 0.129300 g of SnS₂ (manufactured by KOJUNDO CHEMICAL LABORATORY CO., LTD), and 0.053094 g of Al₂S₃ (manufactured by KOJUNDO CHEMICAL LABORATORY CO., LTD).

The composition of the synthesized sulfide solid electrolyte according to Example 3 was Li_{3.4125}Al_{0.1375}Sn_{0.1375}P_{0.725}S₄. In the sulfide solid electrolyte according to Example 3, M0 ≈ 0.18966 was satisfied.

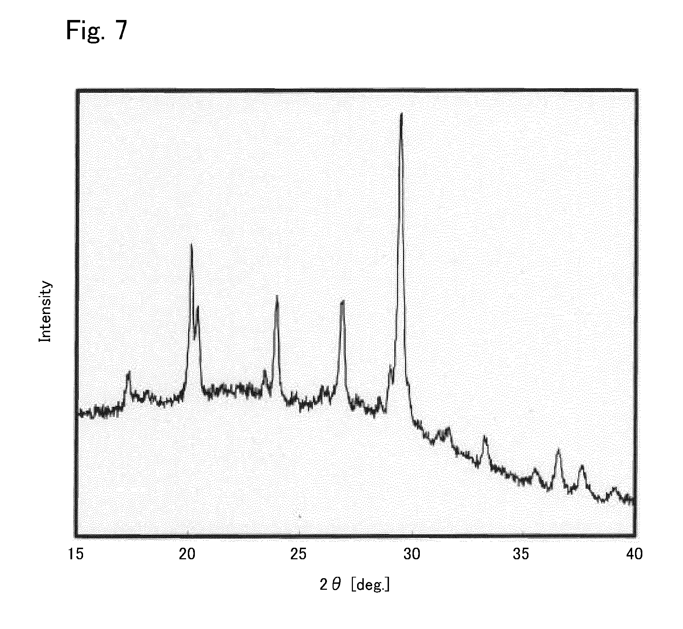

In addition, regarding the sulfide solid electrolyte according to Example 3, an X-ray diffraction measurement was carried out in the same manner as in Example 1. The result is shown in Fig. 7. Comparing Fig. 7 and Fig. 1, it was found that they had peaks at the same positions. Therefore, the structure of the sulfide solid electrolyte according to Example 3 was the crystal phase A.

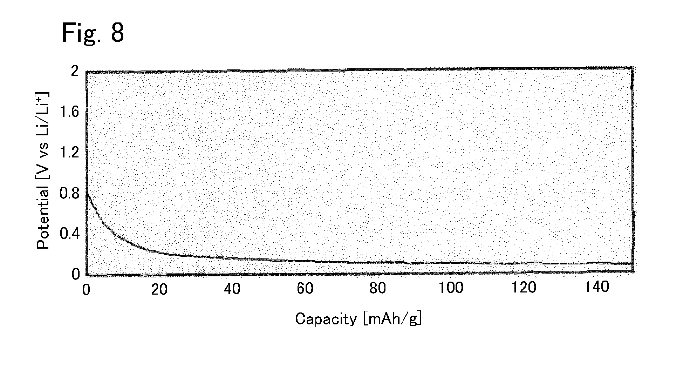

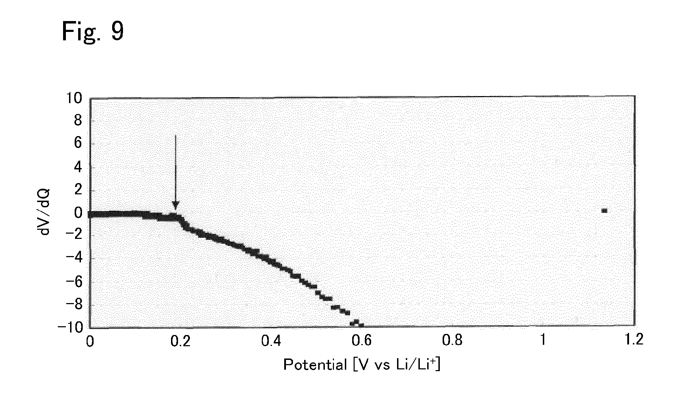

Further, an electrochemical measurement cell according to Example 3 was produced in the same manner as the producing method of the electrochemical measurement cell according to Example 1, except that the sulfide solid electrolyte according to Example 3 was used in place of the sulfide solid electrolyte according to Example 1. Then, the capacity/potential curve of the electrochemical measurement cell according to Example 3 was obtained in the same manner as that of the electrochemical measurement cell according to Example 1. After that, the obtained curve was differentiated with respect to the capacity, and the point where the differentiation coefficient was changed (the point shown by the arrow) was defined as the reduction decomposition potential. The reduction decomposition potential of the sulfide solid electrolyte according to Example 3 was 0. 192V in lithium reference. The capacity/potential curve of the electrochemical measurement cell according to Example 3 is shown in Fig. 8, and the relationship obtained by differentiating the capacity/potential curve shown in Fig. 8 with respect to the capacity is shown in Fig. 9.

### [Comparative Example 1]

A sulfide solid electrolyte according to Comparative Example 1 was synthesized in the same manner as in Example 1, except that the starting materials in synthesizing the electrolyte were 0.390528 g of Li₂S (manufactured by Nippon Chemical Industrial CO., LTD.), 0.3665643 g of P₂S₅ (manufactured by Aldrich), and 0.2429069 g of GeS₂ (manufactured by KOJUNDO CHEMICAL LABORATORY CO., LTD).

The composition of the synthesized sulfide solid electrolyte according to Comparative Example 1 was Li_{3.35}Ge_{0.35}P_{0.65}S₄. In the sulfide solid electrolyte according to Comparative Example 1, M0 = 0 was satisfied.

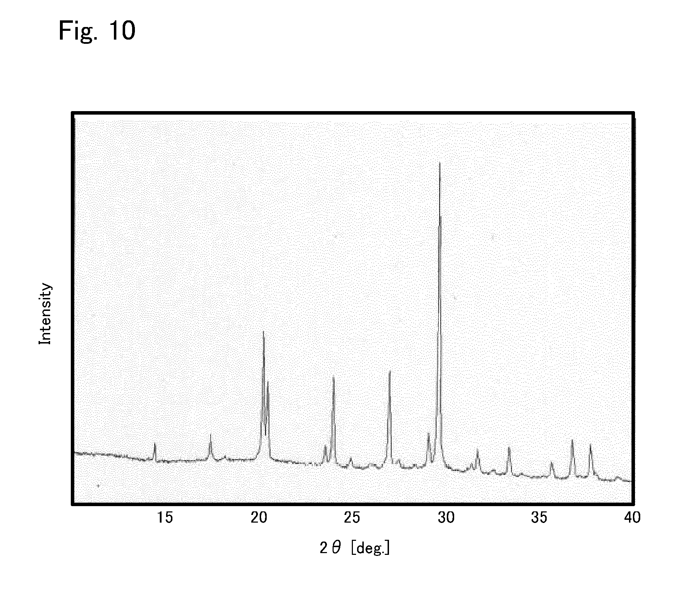

In addition, regarding the sulfide solid electrolyte according to Comparative Example 1, an X-ray diffraction measurement was carried out in the same manner as in Example 1. The result is shown in Fig. 10. Comparing Fig. 10 and Fig. 1, it was found that the positions of the peaks were largely different. Therefore, the structure of the sulfide solid electrolyte according to Comparative Example 1 was not the crystal phase A.

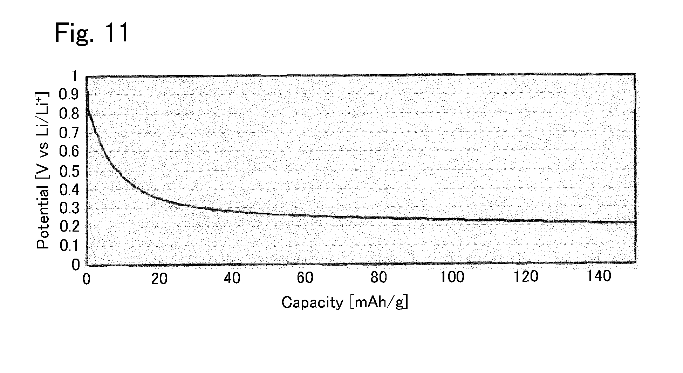

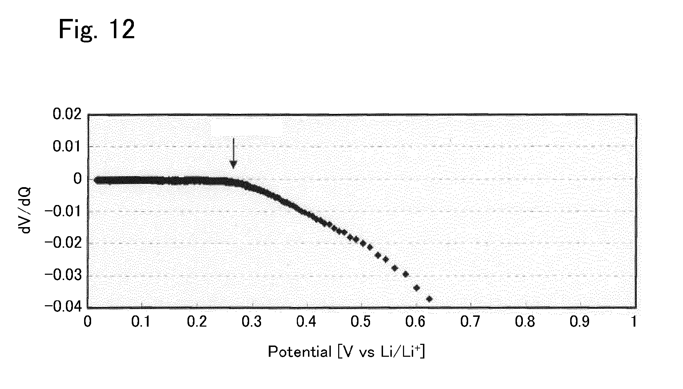

Further, an electrochemical measurement cell according to Comparative Example 1 was produced in the same manner as in the producing method of the electrochemical measurement cell according to Comparative Example 1, except that the sulfide solid electrolyte according to Comparative Example 1 was used in place of the sulfide solid electrolyte according to Example 1. Then, the capacity/potential curve of the electrochemical measurement cell according to Comparative Example 1 was obtained in the same manner as that of the electrochemical measurement cell according to Example 1. After that, the obtained curve was differentiated with respect to the capacity, and the point where the differential coefficient was changed (the point shown by the arrow) was defined as the reduction decomposition potential. The reduction decomposition potential of the sulfide solid electrolyte according to Comparative Example 1 was 0.258V in lithium reference. The capacity/potential curve of the electrochemical measurement cell according to Comparative Example 1 is shown in Fig. 11, and the relationship obtained by differentiating the capacity/potential curve shown by Fig. 11 with respect to the capacity is shown in Fig. 12.

### [Comparative Example 2]

A sulfide solid electrolyte according to Comparative Example 2 was synthesized in the same manner as in Example 1, except that the starting materials in synthesizing the electrolyte were 0.39019 g of Li₂S (manufactured by Nippon Chemical Industrial CO., LTD.), 0.377515 g of P₂S₅ (manufactured by Aldrich), and 0.232295 g of SnS₂ (manufactured by KOJUNDO CHEMICAL LABORATORY CO., LTD). The composition of the synthesized sulfide solid electrolyte according to Comparative Example 2 was Li_{3.275}Sn_{0.275}P_{0.725}S₄. In the sulfide solid electrolyte according to Comparative Example 2, M0 = 0 was satisfied.

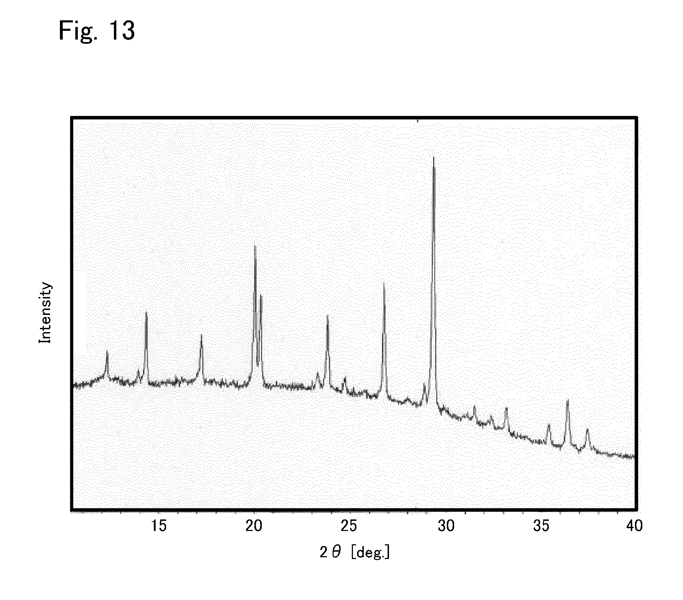

In addition, regarding the sulfide solid electrolyte according to Comparative Example 2, an X-ray diffraction measurement was carried out in the same manner as in Example 1. The result is shown in Fig. 13. Comparing Fig. 13 and Fig. 1, it was found that the positions of the peaks were largely different. Therefore, the structure of the sulfide solid electrolyte according to Comparative Example 2 was not the crystal phase A.

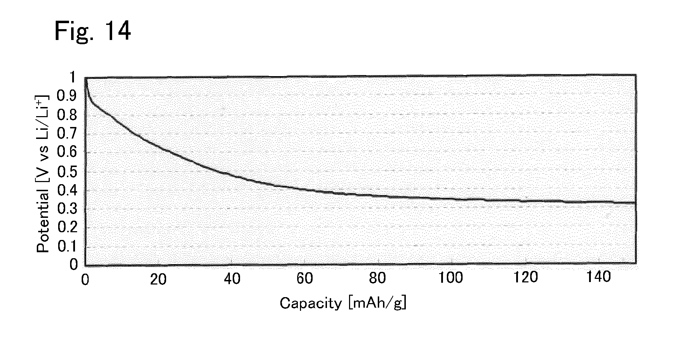

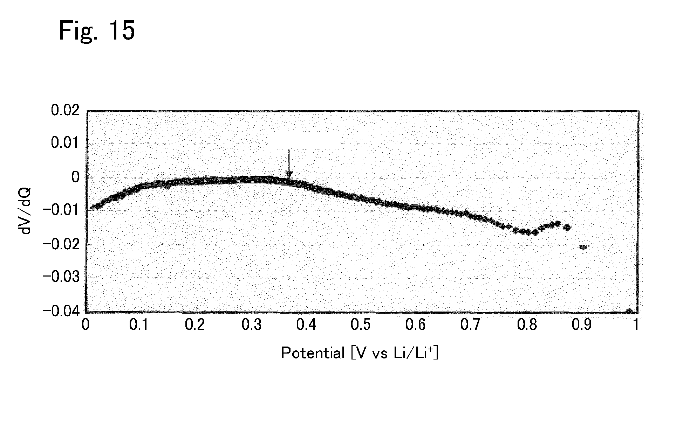

Further, an electrochemical measurement cell according to Comparative Example 2 was produced in the same manner as in the producing method of the electrochemical measurement cell according to Example 1, except that the sulfide solid electrolyte according to Comparative Example 2 was used in place of the sulfide solid electrolyte according to Example 1. Then, the capacity/potential curve of the electrochemical measurement cell according to Comparative Example 2 was obtained in the same manner as that of the electrochemical measurement cell according to Example 1. Thereafter, the obtained curve was differentiated with respect to the capacity, and the point where the differential coefficient was changed (the point shown by the arrow) was defined as the reduction decomposition potential. The reduction decomposition potential of the sulfide solid electrolyte according to Comparative Example 2 was 0.3374V in lithium reference. The capacity/potential curve of the electrochemical measurement cell according to Comparative Example 2 is shown in Fig. 14, and the relationship obtained by differentiating the capacity/potential curve with respect to the capacity is shown in Fig. 15.

### [Comparative Example 3]

A sulfide solid electrolyte according to Comparative Example 3 was synthesized in the same manner as in Example 1, except that the starting materials in synthesizing the electrolyte were 0.432869 g of Li₂S (manufactured by Nippon Chemical Industrial CO., LTD.), 0.3823389 g of P₂S₅ (manufactured by Aldrich), 0.1013441 g of GeS₂ (manufactured by KOJUNDO CHEMICAL LABORATORY CO., LTD), and 0.083448 g of Al₂S₃ (manufactured by KOJUNDO CHEMICAL LABORATORY CO., LTD).

The composition of the synthesized sulfide solid electrolyte according to Comparative Example 3 was Li_{3.56}Al_{0.21}Ge_{0.14}P_{0.65}S₄. In the synthesized sulfide solid electrolyte according to Comparative Example 3, M0 ≈ 0.32308 was satisfied.

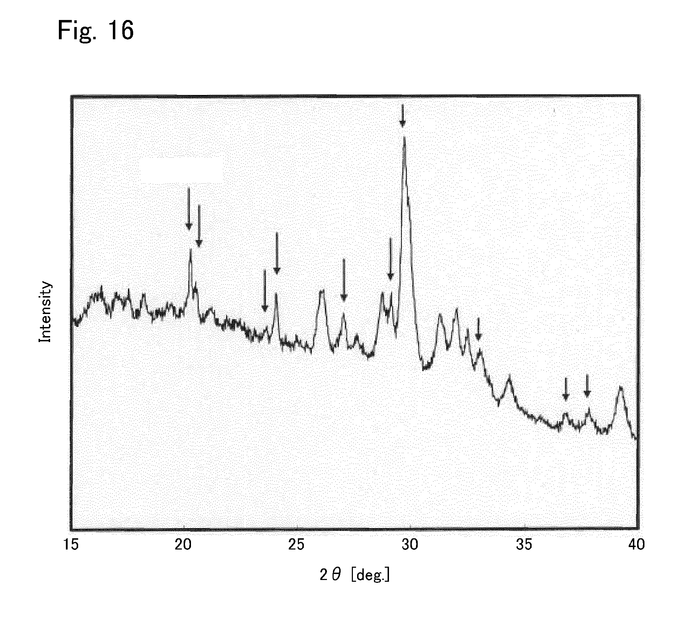

In addition, regarding the sulfide solid electrolyte according to Comparative Example 3, an X-ray diffraction measurement was carried out in the same manner as in Example 1. The result is shown in Fig. 16. The peaks originated from the crystal phase A are shown by the arrows in Fig. 16. In Fig. 16, in addition to the peaks corresponding to the crystal phase A, peaks originated from unknown impurities were confirmed. Therefore, the sulfide solid electrolyte according to Comparative Example 3 included a structure other than the crystal phase A.

### [Comparative Example 4]

A sulfide solid electrolyte according to Comparative Example 4 was synthesized in the same manner as in Example 1, except that the starting materials in synthesizing the electrolyte were 0.44028 g of Li₂S (manufactured by Nippon Chemical Industrial CO., LTD.), 0.3851009 g of P₂S₅ (manufactured by Aldrich), 0.076557 g of GeS₂ (manufactured by KOJUNDO CHEMICAL LABORATORY CO., LTD), and 0.098059 g of Al₂S₃ (manufactured by KOJUNDO CHEMICAL LABORATORY CO., LTD).

The composition of the synthesized sulfide solid electrolyte according to Comparative Example 4 was Li_{3.595}Al_{0.245}Ge_{0.105}P_{0.65}S₄. In the sulfide solid electrolyte according to Comparative Example 4, M0 ≈ 0.37692 was satisfied.

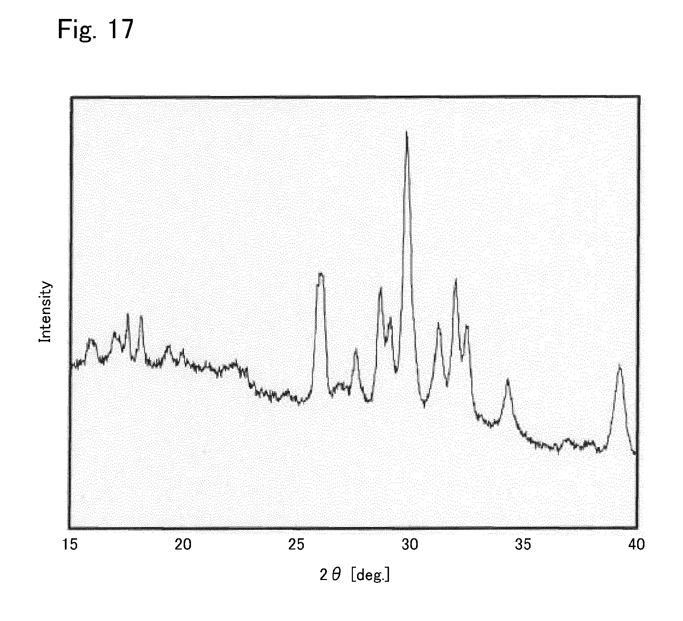

In addition, regarding the sulfide solid electrolyte according to Comparative Example 4, an X-ray diffraction measurement was carried out in the same manner as in Example 1. The result is shown in Fig. 17. Comparing Fig. 17 and Fig. 1, it was found that positions of the peaks were largely different. Therefore, it was confirmed that the structure of the sulfide solid electrolyte according to Comparative Example 4 was not the crystal phase A, and it was difficult to synthesize the crystal phase A if the value of M0 was too large.

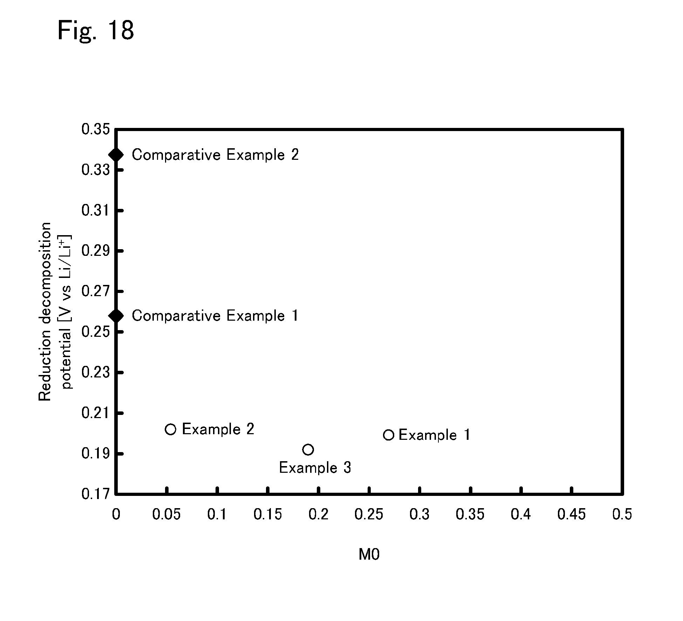

The results of the reduction decomposition potentials of Examples 1 to 3 and Comparative Examples 1 and 2 are collectively shown in Fig. 18. As shown in Fig. 18, it was confirmed that it is possible to decrease the reduction decomposition potential more than that (around 0.25V in lithium reference) of the conventional LGPS-based sulfide solid electrolyte, by having a sulfide solid electrolyte which has the crystal phase A wherein 0 < M0 < 0.323 is satisfied.

## Claims

1. A sulfide solid electrolyte comprising Li, Al, Ge, P, and S,
wherein
M0 = M2/M1 is 0 < M0 < 0.323 where M1 is a mole fraction of contained P, and M2 is a mole fraction of contained Al, and
in a case where each of X1 and X2 is an element selected from the group consisting of P, Ge, and Al, a crystal structure of the sulfide solid electrolyte comprises an octahedron O formed by Li and S, a tetrahedron T1 formed by S and X1, and a tetrahedron T2 formed by S and X2, wherein the octahedron O and the tetrahedron T1 share a ridge, and the octahedron O and the tetrahedron T2 share an apex.

2. A sulfide solid electrolyte comprising Li, Al, Sn, P, and S,
wherein
M0 = M2/M1 is 0 < M0 < 0.323 where M1 is a mole fraction of contained P, and M2 is a mole fraction of contained Al, and
in a case where each of Y1 and Y2 is an element selected from the group consisting of P, Sn, and Al, a crystal structure of the sulfide solid electrolyte comprises an octahedron O formed by Li and S, a tetrahedron T1 formed by S and Y1, and a tetrahedron T2 formed by S and Y2, wherein the octahedron O and the tetrahedron T1 share a ridge, and the octahedron O and the tetrahedron T2 share an apex.
